Europäisches Patentamt

**European Patent Office**

**Office européen des brevets**

(19)

(11) Veröffentlichungsnummer: **0 010 548**
**B1**

(12) **EUROPÄISCHE PATENTSCHRIFT**

(45) Veröffentlichungstag der Patentschrift: **30.06.82**

(51) Int. Cl.³: **B 65 G 13/10**

(21) Anmeldenummer: **78100988.1**

(22) Anmeldetag: **25.09.78**

(54) In einer Horizontalebene dreh- und arretierbare Umlenkvorrichtung.

(43) Veröffentlichungstag der Anmeldung:
**14.05.80 Patentblatt 80/10**

(45) Bekanntmachung des Hinweises auf die Patenterteilung:
**30.06.82 Patentblatt 82/26**

(84) Benannte Vertragsstaaten:
**DE FR GB NL**

(56) Entgegenhaltungen:
**AT - B - 19 750**
**DD - A - 42 094**
**DE - A - 1 756 439**
**DE - B - 1 259 241**
**FR - A - 467 475**

**E. HEIDEBROEK "Fördertechnik für Massengüter", Band II, 1953, VEB WILHELM KNAPP VERLAG, Halle (Saale)**

(73) Patentinhaber: **CARL SCHENCK AG**
**Landwehrstrasse 55 Postfach 40 18**
**D-6100 Darmstadt (DE)**

(72) Erfinder: **Zschau, Siegfried**
**Am Bangert 4**
**D-6101 Modautal 2 (DE)**
Erfinder: **Koch, Georg**
**Bachgasse 8**
**D-6123 Bad König (DE)**
Erfinder: **Stösser, Hartmut**
**Hähnleiner Strasse 2**
**D-6144 Zwingenberg (DE)**

(74) Vertreter: **Dallhammer, Herbert, Dipl.-Ing.**
**Carl Schenck AG Patentabteilung Postfach 4018**
**D-6100 Darmstadt (DE)**

## In einer Horizontalebene dreh- und arretierbare Umlenkvorrichtung

Die Erfindung betrifft eine Umlenkvorrichtung zur Verwendung in Rollenbahnen zum Transport von Behältern und/oder Paletten mit einer in einer Horizontalebene dreh- und arretierbaren, die Rollen tragenden Plattform.

Derartige Umlenkvorrichtungen sind für Schienenfahrzeuge bekannt geworden (vergl. FR—A—467475; "Fördertechnik für Massengüter Band 2" von E. Heidebröck, erschienen im VEB Wilhelm Knapp Verlag, Halle (Saale) 1953, Seite 504). Derartige Umlenkvorrichtungen sind nicht geeignet, auf Paletten oder in Behälter verpackte Güter zu transportieren. Darüber hinaus müssen zusätzliche Antriebs- und Bremsaggregate an den Umlenkvorrichtungen angebracht sein, um umzulenkendes Gut sicher und ohne Zerstörung umlenken zu können. Auch ist eine Bewegung des zu fördernden Gutes auf der Umlenkvorrichtung in vertikaler Richtung nicht möglich.

Durch die DE—B—1259241 ist eine Umlenkvorrichtung bekannt geworden, bei der eine exzentrisch angeordnete Rollenbahn vorhanden ist, die über Parallelogrammlenker gegenüber der Drehbühne abgestützt ist. Im Falle eines Niveauunterschiedes zwischen weiterführenden Rollenbahnen und Übergaberollenbahn, wird zu Folge Höhenänderung der Parallellenker diese in Richtung auf die weiterführende Rollenbahn geschwenkt und gleichzeitig abgesenkt. Diese Anordnung bedarf eines beachtlichen Freiraums zwischen dem auf der Drehbühne über Parallellenker abgestützten Rollenbahnabschnitt und der weiterführenden Rollenbahn.

Durch die DD—A—42094 ist eine weitere Art einer Umlenkvorrichtung bekannt geworden, bei der eine Karussellkonstruktion einen geführten Niveauunterschied zwischen Ein- und Ausgabe bewirkt. Eine rasche Umlenkung von Paletten oder Behältern ist mit dieser Einrichtung nicht möglich.

Ausgehend von diesem Stand der Technik liegt der vorliegenden Erfindung die Aufgabe zugrunde, eine rasche, praktisch kontinuierliche Umlenkung von Paletten oder Behältern von einer auf eine andere Rollenbahn zu erreichen, ohne daß ein zusätzliches Antriebs- oder Bremsmittel erforderlich ist, um die umzulenkenden Paletten und/oder Behälter an einer vorbestimmten Stelle auf der Umlenkvorrichtung anzuhalten.

Diese Aufgabe wird ausgehend von dem im ersten Absatz angegebenen Stand der Technik erfindungsgemäß dadurch gelöst, daß mehrere sich kreuzende antreibbare Rollenbahnen exzentrisch zur Drehachse der Plattform auf dieser angeordnet sind, wobei jede Rollenbahn aus zwei parallel zueinander angeordneten Reihen von in Transportrichtung hintereinander angeordneten, aussen jeweils mit einem Spurkranz versehenen Rollen besteht, daß die Paletten und/oder Behälter Laufschienen aufweisen, die auf den Rollen aufliegen und von deren Spurkränzen seitlich geführt werden, daß die Reihen von Rollen der einen Bahn jeweils zwischen Rollen der sie kreuzenden Rollenbahn verlaufen, und daß die Schienen eine derartige Höhe aufweisen, daß der Boden der Paletten und/oder Behälter im Abstand über den Radkränzen der Rollen über der kreuzenden Rollenbahn liegt. Hierdurch wird erreicht, daß bie guter Seitenführung durch die Spurkränze eine quer verlaufende Bahn überfahren werden kann, wenn die Paletten und/oder Behälter Laufschienen aufweisen, deren Höhe so bemessen ist, daß gefahrlos ein Überfahren der Spurkränze der quer verlaufenden Rollenreihen ermöglicht wird.

Als eine Ausgestaltung dieser Lösung, der der Erfindung zugrunde liegenden Aufgabe wird es angesehen, daß die sich kreuzenden Rollenbahnen gegeneinander höhenverstellbar sind, und daß die Anschlußrollenbahnen verschiedenes Niveau haben. Durch diese zusätzliche Anwendung des Gegenstandes dieses Anspruchs, wird zusätzlich ermöglicht, daß ein Anheben der Paletten auf ein anderes Abförderniveau und/oder ohne Drehung der die Rollen tragenden Plattform, d.h. auch ohne Drehung der Palette, ein Umsetzen auf eine kreuzende Bahn ermöglicht wird.

Durch die Zeitschrift Fördern und Heben 21 (1971) Nr. 5 Seite 232—236 ist durch den Aufsatz "Verzweigungen in horizontalen Förderstrecken" eine Röllchenbahn bekannt geworden, bei der eine Röllchenweiche eingesetzt ist, um zu förderndes Gut von einer Eingangsstation auf mehrere Verteilstationen zu verteilen. Diese Einrichtung ist jedoch nicht geeignet im Bereich der Verteilung, das zu verteilende Gut zu führen. Es besteht somit die Gefahr, daß an dieser Stelle der kontinuierliche Verteilvorgang zufolge fehlender Führung zusammenbricht. Auch kann eine Beschädigung von Paletten und/oder Behältern mit ebenem Boden nicht ausgeschlossen werden.

Die der vorliegenden Erfindung zugrunde liegende Aufgabe, läßt sich ausgehend von dem im ersten Absatz angegebenen Stand der Technik auch mit Paletten und/oder Behältern mit ebenem Boden auch dadurch lösen, daß mehrere sich kreuzende antreibbare Rollenbahnen exzentrisch zur Drehachse der Plattform auf dieser angeordnet sind, wobei jede Rollenbahn aus zwei parallel zueinander angeordneten Reihen von in Transportrichtung hintereinander angeordneten, aussen jeweils mit einem Spurkranz versehenen Rollen besteht, und daß die sich kreuzenden Rollenbahnen gegeneinander höhenverstellbar sind. Damit wird auch bei dieser Lösung der der Erfindung zugrunde liegenden Aufgabe eine eindeutige Führung von Paletten und/oder Behältern mit glattem Boden erreicht, und zwar durch die Spurkränze der Rollen und ohne daß die Paletten auf ihrer Unterseite Schienen aufweisen müssen, wird mit ein und derselben Vorrichtung erreicht, daß die Paletten durch Drehung der Plattform umgesetzt werden können, wobei die Palette sich mitdreht oder die Palette ohne Drehung der Plattform, d.h. also auch ohne Drehung der Palette selbst von einer Bahn auf die andere übergeben werden kann (aus Längstransport wird Quertransport auf der Abförderbahn), und zusätzlich in beiden Fällen mit derselben Vorrichtung ein Höhenniveau zwischen Zu- und Abführbahn überwunden werden kann.

Bei der letztgenannten Lösung können Paletten und/oder Behälter mit glattem Boden Verwendung finden. Durch Anheben bzw. Senken zweier sich kreuzender Rollenbahnen gegeneinander erfolgt das Umsetzen einer im Kreuzungsbereich dieser Bahn befindlichen Palette oder eines Behälters, von der einen auf die sich kreuzende Bahn.

Eine Ausgestaltung der letztgenannten Lösung der der Erfindung zugrunde leigenden Aufgabe besteht darin, daß die Anschlußrollenbahnen verschiedenes Niveau haben.

In noch weiterer Ausgestaltung der Erfindung wird vorgeschlagen, daß die eine Rollenbahn eine andere Spurweite als die andere Rollenbahn hat. Damit wird in besonders vorteilhafter Weise erreicht, daß auch beim Transport von Rechteckunterlagen ohne Drehung der Unterlage—d.h. die Unterlage selbst wird nicht um 90° gedreht, sondern sie behält ihre Lage bei, es greifen lediglich an den anderen beiden parallelen Seiten der Unterlage die Rollen der Rollenbahn mit der anderen Spurweite an—das zu fördernde Gut ohne Drehung weiter befördert werden kann. Eine derartige Weitergabe ohne Drehung bietet sich insbesondere dann mit Vorteil an, wenn eine Palette beispielsweise mit Langgut nur von der Schmalseite her beladbar ist, die Palette dem Langgut angepasst ist, also eine rechteckige Grundfläche hat, jedoch nach der Umlenkung im Quertransport unter einer Kranbahn entlang bewegt wird.

In noch weiterer Ausgestaltung der Erfindung wird vorgeschlagen, daß vier sich rechtwinklig kreuzende Rollenbahnen auf der Plattform angeordnet sind.

Mit der erfindungsgemäß ausgestalteten Umlenkvorrichtung wird ein Verfahren zur Umlenkung von Paletten und/oder Behältern ermöglicht, das sich dadurch auszeichnet, daß nach dem Einschwenken der mit einer Palette und/oder einem Behälter beladenen Rollenbahn in Richtung der weiterführenden Förderstrecke ein Beladen der rechtwinkligen nunmehr der Zuförderrichtung zugeordneten Rollenbahn und somit ein gleichzeitiges Be- und Entladen der Plattform erfolgt. Die durch die erfinderische Verfahrensweise erreichbaren Wirkungen, lassen sich sowohl bei Paletten und/oder Behältern mit Kufen als auch bei Paletten und/oder Behältern mit glattem Boden, sowohl bei der Drehung der Plattform, wobei die Palette und/oder der behälter sich mitdreht, oder ohne Drehung der Plattform d.h. also auch ohne Drehung der Palette selbst ausnützen.

Anhand der Zeichnung wird die Erfindung näher erläutert.

Es zeigen hierbei:

Figur 1, einen Querschnitt einer gemäß Anspruch 1 ausgestalteten Umlenkvorrichtung.

Figur 2, eine Draufsicht auf die erfindungsgemäß ausgestaltete Umlenkvorrichtung.

Eine drehbare Plattform 1 stützt sich über eine Lagerung 2, die als Antrieb ein Zahnrad 3 und ein Ritzel 4 enthält, welches von einem Antreibsmotor 5 angetrieben wird, auf einem Rahmen 6 ab, welcher mittels Stützen 7 mit einem Fundament 8 verbunden ist. Die Oberseite der drehbaren Plattform 1 ist mit vier Förderbahnen versehen, von denen jeweils zwei parallel zueinander angeordnet sind, wobei das eine Paar das andere Schneidet. Jede Förderbahn wird durch zwei Reihen von jeweils paarig zueinander angeordneten Spurkranzrollen gebildet. Die Rollen einer Bahn zind mit 9, die der anderen Bahnen mit 10, 13 bzw. 12 bezeichnet.

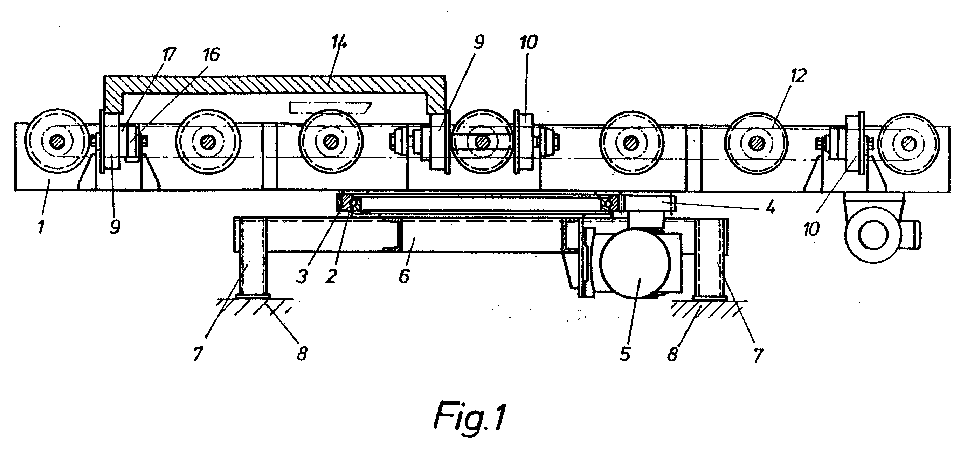

Eine Palette 14, mit Schienen auf ihrer Unterseite, wird gemäß Figur 1 von den paarigen Spurkranzrollen 9 in einer Richtung transporttiert. Alle Spurkranzrollen 9 sind über Antriebsvorrichtungen 16 bzw. 17, welche als Zahnreimen ausgebildet sein können, antreib- und bremsbar, so daß die Unterlage 14 an jeder vorbestimmten Stelle auf der drehbaren Plattform 1 angehalten werden kann. Wird der Antriebsmotor 5 ingang gesetzt, so wird über das Ritzel 4 und das Zahnrad 3 die drehbare Plattform 1 in Richtung des Pfeils 18 bzw. in Richtung des Pfeils 19 gedreht, so daß eine Richtungsänderung der Palette oder des Behälters vorgenommen wird, ohne daß die Palette von der sie stützenden Transportbahn während der Richtungsänderung abgenommen werden muß. Durch die Schienen auf der Unterseite der Palette ist es auch möglich, daß eine Querrollenbahn von der Palette 14 gekreuzt wird, ohne daß ein Anheben der Palette erforderlich ist und zwar auch dann, wenn die kreuzende Rollenbahn, die ebenfalls aus Spurkranzrollen besteht, dasselbe Höhenniveau besitzt wie die augenblickliche Transportbahn.

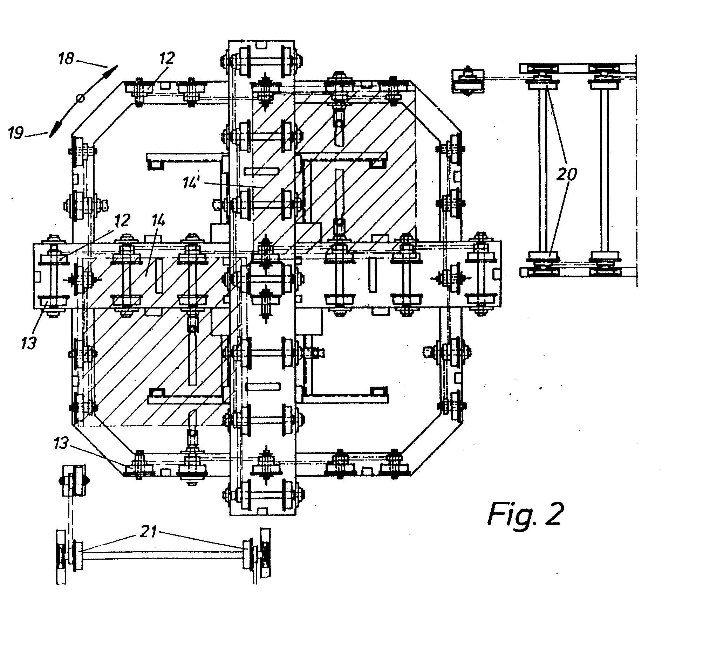

Während des Schwenkvorgangs kann gemäß Figur 2 die Palette 14 bereits in eine Lage 14' transportiert worden sein, und somit nach Beendigung des Verschwenkens um 90° abrufbereit vor einer weiterführenden Förderstrecke 20 liegen.

Eine Zuförderstrecke 21 ist nun in der Lage, nach Einschwenken der Unterlage 14, in die Richtung der weiterführenden Förderstrecke 20, eine neue Unterlage auf die freie, aus paarig angeordneten Spurkranzrollen 13 bestehende Förderbahn, aufzugeben. Wie aus der Beschreibung und der Zeichnung erkennbar, muß die Spurbreite der Förderbahn aus paarig angeordneten Spurkranzrollen 9, nicht gleich der Förderbahn aus paarig angeordneten Spurkranzrollen 12 sein, d.h. der Parallelabstand oder die Spurbreite beider zusammanwirkender Förderbahnen kann verschieden sein. Dies ist insbesondere bei rechtwinkligen Unterlagen von Vorteil, insbesondere dann, wenn die aus paarigen Spurkranzrollen 9 bestehende Förderbahn gegen die aus paarigen Spurkranzrollen 12 bestehende Förderbahn heb- oder senkbar angeordnet ist. In diesem Falle können, wie eingangs bereits offenbart wurde, beispeilsweise mit Langgut beladene Paletten, die nur von der Schmalseite her beladbar sind, im Quertransport unter einer Kranbahn entlang bewegt werden.

In derselben Weise kann auch die aus paarig angeordneten Spurkranzrollen 10 bestehende Förderbahn gegenüber der aus paarig angeordneten Spurkranzrollen 13 bestehenden Förderbahn heb- und senkbar ausgebildet sein, so daß während des Verschwenkens der drehbaren Plattform 1, bei Einsatz von Paletten und/oder Behältern mit glattem Boden, sowohl ein Horizontal-, als auch ein Vertikaltransport der zu transportierenden Palette 14 durchgeführt werden kann. Die Figur 2 stellt darüber hinaus sehr klar das Umlenkverfahren mit der erfindungsgemäß ausgestalteten Umlenkvorrichtung dar, bei dem nach dem Einschwenken der mit einer Palette beladenen Rollenbahn in Richtung der weiterführenden Förderstrecke 20, ein Beladen der rechtwinklig nunmehr der Zuförderrichtung 21 zugeordneten Rollenbahn dargestellt wird, was die Möglichkeit der gleichzeitigen Be- und Entladung der drehbaren Plattform 1 zeigt.

Die Erfindung ist somit nicht eingeschränkt, auf die Anförderung von Paletten oder Behältern im Längstransport und deren Abförderung im Quertransport ohne Verschwenken der Plattform oder ein Verschwenken der drehbaren Plattform in einer Ebene, sondern es kann die erfindungsgemäße Umlenkvorrichtung auch als Übergabestation zwischen einer Zuförderstrecke 21 und einer weiterführenden Förderstrecke 20 eingesetzt werden, deren Höhenniveau gegenüber einer Nullebene verschieden ist.

**Patentansprüche**

1. Umlenkvorrichtung zur Verwendung in Rollenbahnen zum Transport von Behältern und/oder Paletten (14) mit einer in einer Horizontalebene dreh- und arretierbaren die Rollen (9, 10, 12, 13) tragenden Plattform (1), dadurch gekennzeichnet, daß mehrere sich kreuzende antreibbare Rollenbahnen (9, 10 und 12, 13) exzentrisch zur Drehachse der Plattform (1) auf dieser angeordnet sind, wobei jede Rollenbahn (9 bzw. 10 bzw. 12 bzw. 13) aus zwei parellel zueinander angeordneten Reihen von in Transportrichtung hintereinander angeordneten, aussen jeweils mit einem Spurkranz versehenen Rollen (9 bzw. 10 bzw. 12. bzw. 13) besteht, daß die Paletten (14) und/oder Behälter Laufschienen aufweisen, die auf den Rollen (9 bzw. 10 bzw. 12 bzw. 13) aufliegen und von deren Spurkränzen seitlich geführt werden, daß die Bahnen von Rollen (9 bzw. 10) der einen Bahn jeweils zwischen Rollen (12 bzw. 13) der sie kreuzenden Rollenbahn verlaufen, und daß die Schienen eine derartige Höhe aufweisen, daß der Boden der Paletten (14) und/oder Behältern im Abstand über den Radkränzen der Rollen (9 bzw. 10 bzw. 12 bzw. 13) der kreuzenden Rollenbahn liegt.

2. Umlenkvorrichtung nach Anspruch 1 dadurch gekennzeichnet, daß die sich kreuzenden Rollenbahnen (9, 10 und 12, 13) gegeneinander höhenverstellbar sind, und daß die Anschlußrollenbahnen (20 bzw. 21) verschiedenes Niveau haben.

3. Umlenkvorrichtung zur Verwendung in Rollenbahnen zum Transport von Paletten (14) und/oder Behältern, mit einer in einer Horizontalebene dreh- und arreteirbare die Rollen tragenden Plattform (1) dadurch gekennzeichnet, daß mehrere sich kreuzende antreibbare Rollenbahnen (9 bzw. 10 bzw. 12 bzw. 13) exzentrisch zur Drehachse der Plattform (1) auf dieser angeordnet sind, wobei die Rollenbahn (9 bzw. 10 bzw. 12 bzw. 13) aus zwei parallel zueinander angeordneten Reihen von in Transportrichtung hintereinander angeordneten, aussen jeweils mit einem Spurkranz versehenen Rollen (9 bzw. 10 bzw. 12 bzw. 13) besteht, und daß die sich kreuzenden Rollenbahnen (9, 10 und 12, 13) gegeneinander höhenverstellbar sind.

4. Umlenkvorrichtung nach Anspruch 3 dadurch gekennzeichnet, daß die Anschlußrollenbahnen (20 bzw. 21) verschiedenes Niveau haben.

5. Umlenkvorrichtung nach Anspruch 3 und/oder 4 dadurch gekennzeichnet, daß die eine Rollenbahn (9, 10) eine andere Spurweite als die andere Rollenbahn (12, 13) hat.

6. Umlenkvorrichtung nach einem oder mehreren der vorhergehenden Ansprüche, dadurch gekennzeichnet, daß vier sich rechtwinklig kreuzende Rollenbahnen (9, 10, 12, 13) auf der Plattform (1) angeordnet sind.

7. Verfahren zur Umlenkung von Paletten (14) und/oder Behältern mit einer Umlenkvorrichtung nach Anspruch 6 dadurch gekennzeichnet, daß nach dem Einschwenken der mit einer Palette (1) und/oder einem Behälter beladenen Rollenbahn (9) in Richtung der weiterführenden Förderstrecke (20) ein Beladen der rechtwinkligen, nunmehr der Zuförderrichtung zugeordneten Rollenbahn (13) und somit ein gleichzeitiges Be- und Entladen der Plattform (1) erfolgt.

**Revendications**

1.—Dispositif de déviation devant être utilisé dans des transporteurs à roues pour le transport de conteneurs et/ou de palettes (14) comportant une plate-forme (1) pouvant tourner et être bloquée dans un plan horizontal, supportant les roues (9, 10, 12, 13), caractérisé en ce que plusieurs transporteurs à roues (9, 10 et 12, 13) pouvant être entraînés et se croisant, sont disposés sur la plate-forme (1) excentriquement par rapport à son axe de rotation, chaque transporteur (9, 10, 12 ou 13, respectivement) comprenant deux rangées parallèles de roues (9, 10, 12 ou 13, respectivement) comportant chacune un boudin, disposées les unes à la suite des autres dans le sens de transport; en ce que les palettes (14) et/ou les conteneurs présentent des glissières qui reposent sur les roues (9, 10, 12 ou 13, respectivement) et sont guidées latéralement par leurs boudins; en ce que les voies formées par les roues (9, respectivement 10) de l'un des transporteurs passent chacune entre des roues (12, respectivement 13) de la voie qui la croise; et en ce que les glissières présentent une hauteur telle que le fond des palettes (14) et/ou des conteneurs est à une certaine hauteur au-dessus des boudins des roues (9, 10, 12 ou 13, respectivement) du transporteur qu'il croise.

2.—Dispositif de déviation selon la revendication 1, caractérisé en ce que les transporteurs (9, 10 et 12, 13) qui se croisent ont une hauteur mutuelle réglable, et en ce que les transporteurs à raccorder (20, respectivement 21) ont un niveau différent.

3.—Dispositif de déviation devant être utilisé dans des transporteurs à roues pour transporter des palettes (14) et/ou des conteneurs comportant une plate-forme (1) portant les roues pouvant tourner et être bloquée dans un plan horizontal, caractérisé en ce que plusieurs transporteurs à roues entraînés (9, 10, 12 et respectivement 13) qui se croisent sont disposés sur la plate-forme (1) excentriquement par rapport à son axe de rotation, le transporteur à roues (9, 10, 12 ou 13) étant constitué par dexu rangées parallèles de roues comportant chacune extérieurement un boudin (9, 10, 12 et respectivement 13) disposées les unes à la suite des autres dans le sens de transport, et en ce que les transporteurs (9, 10 et 12, 13) qui se croisent ont une hauteur mutuelle réglable.

4.—Dispositif selon la revendication 3, caractérisé en ce que les transporteurs à raccorder (20, respectivement 21) ont un niveau différent.

5.—Dispositif selon la revendication 3 et/ou la revendication 4, caractérisé en ce que l'un des transporteurs (9, 10) a une largeur de voie différente de celle de l'autre transporteur (12, 13).

6.—Dispositif selon une ou plusieurs des revendications précédentes, caractérisé en ce que quatre transporteurs à roues se croisant à angle droit (9, 10, 12, 13) sont disposées sur la plate-forme (1).

7.—Procédé de déviation de palettes (14) et/ou de conteneurs au moyen d'un dispositif de déviation selon la revendication 6, caractérisé en ce qu'après avoir fait pivoter le transporteur à roues (9) chargé d'une palette (14) et/ou d'un conteneur dans la direction du chemin de transport d'évacuation (20), on charge le transporteur (13) perpendiculaire, correspondant désormais à la direction d'amenée et l'on effectue donc simultanément le chargement et le déchargement de la plate-forme (1).

**Claims**

1. A reorientation device for use in roller tracks for transporting containers and/or pallets (14) having a platform (1), which can be rotated and stopped in a horizontal plane and which supports the rollers (9, 10, 12, 13), characterised in that several intersecting drivable roller tracks (9, 10 and 12, 13) are arranged on the platform eccentrically of the axis of rotation of the platform (1), each of the roller tracks (9, 10, 12, or 13) comprising two parallel rows (9, 10, 12, 13) which are arranged one after another in the direction of transport and are provided on the outside with wheel rims for each respective lane of the track; that the pallets (14) and/or containers have guide portions which rest on the rollers (9, 10, 12 or 13) and are guided at their sides by the wheel rims; that the tracks of the rollers (9, 10) of one track each run between rollers (12, 13) of the other intersecting roller track; and that the guide portions have such a height that the bases of the pallets (14) and/or containers are at a spacing above the wheel rims of the rollers (9, 10, 12 or 13) of the intersecting roller tracks.

2. A reorientation device according to claim 1, characterised in that the intersecting roller tracks (9, 10 and 12, 13) can be adjusted in height relative to one another, and that the connecting roller tracks (20, 21) have a different level.

3. A reorientation device for use in roller tracks for transporting pallets (14) and/or containers having a platform (1) which can be rotated and stopped in a horizontal plane and which supports the rollers, characterised in that several intersecting drivable roller tracks (9, 10, 12 or 13) are arranged thereon eccentrically of the axis of rotation of the platform (1), the roller tracks (9, 10, 12 or 13) comprising two parallel rows of rollers (9, 10 or 12, 13) which are arranged one after another in the direction of transport and which are provided on the outside with wheel rims; and that the intersecting roller tracks (9, 10 and 12, 13) can be adjusted in height relative to one another.

4. A reorientation device according to claim 3, characterised in that the connecting roller tracks (20, 21) have a different level.

5. A reorientation device according to any one or more of the preceding claims characterised in that one roller track (9, 10) has a different lane width than the other roller track (12, 13).

6. A reorientation device according to one or more of the preceding claims characterised in that four rectangularly crossing roller tracks (9, 10, 12, 13) are arranged on the platform (1).

7. A method of reorienting pallets (14) and/or containers with a reorientation device according to claim 6, characterised in that after the roller track (9) laden with a pallet (1) and/or a container is pivoted in the direction of the rest of the conveyor path (20) the perpendicular roller track (13) now assigned to the forward direction is loaded and thus the platform (1) is also loaded and unloaded at the same time.

*Fig.1*

0010 548

Fig. 2